# EUROPÄISCHE PATENTSCHRIFT

(11) **EP 1 437 504 B1**
(45) Veröffentlichungstag und Bekanntmachung des Hinweises auf die Patenterteilung: **08.04.2009**
(21) Anmeldenummer: 04000553.0
(22) Anmeldetag: 13.01.2004
(51) Int. Cl.: F02M 35/12

(54) **Luftschalldämpfer für ein Fahrzeuglufttemperiergerät**
Air silencer for an automotive air temperature conditioning apparatus
Silencieux d'air pour un appareil à conditionner la température d'air d'un véhicule

(30) Priorität: 13.01.2003 DE 10300920
(43) Veröffentlichungstag der Anmeldung: 14.07.2004
(73) Patentinhaber: J. Eberspächer GmbH & Co. KG, 73730 Esslingen (DE)
(72) Erfinder: Collmer, Andreas, 73760 Ostfildern (DE); Schlecht, Patric, 73760 Ostfildern (DE)
(74) Vertreter: Ruttensperger, Bernhard

(56) Entgegenhaltungen:
- DE-A1- 2 907 212
- DE-A1- 4 136 822
- DE-C- 473 951
- DE-U- 1 939 863
- DE-U1- 29 609 785
- FR-A1- 2 710 880

## Beschreibung

Die vorliegende Erfindung betrifft einen Luftschalldämpfer für ein Fahrzeugtemperiergerät, beispielsweise eine Fahrzeugheizung, ggf. aber auch ein Fahrzeugklimagerät. Die FR 2 710 880, DE 4 186 822 und DE 473 951 zeigen Beispiele von Luftschalldämpfer für Fahrzeugtemperiergeräte.

Durch derartige Temperiergeräte wird Luft thermisch behandelt, also im Falle einer Heizung beispielsweise vorerwärmt und dann in einen Fahrzeuginnenraum eingeleitet. Dieser Fahrzeuginnenraum kann beispielsweise der Fahrgastraum eines Personenkraftfahrzeugs sein, kann aber auch beispielsweise der Innenraum eines Wohnmobils bzw. eines Wohnwagens sein, in welchen im abgestellten Zustand die thermisch behandelte Luft eingeleitet werden soll. Insbesondere bei derartigen Wohnmobilen oder Wohnwagen ist es bekannt, das Temperiergerät außerhalb des Fahrzeugs bzw. des Innenraums desselben anzuordnen und dann über eine Leitungsverbindung die thermisch behandelte Luft in diesen Innenraum einzuleiten. Die einzuleitende Luft kann zuvor durch eine entsprechende Verbindung aus dem Innenraum abgezogen worden sein, so dass nach dem Umluftprinzip gearbeitet wird. Sowohl beim Einleiten thermisch behandelter Luft, als auch beim Abziehen thermisch zu behandelnder Luft besteht das Problem, dass einerseits strömungsbedingt, andererseits dadurch, dass diese Luft über ein Gebläse gefördert wird, in den Innenraum des Fahrzeugs Geräusche geleitet werden. Vor allem bei Wohnmobilen oder Wohnwagen kann dies sehr störend sein, wenn bei vergleichsweise niedrigen Außentemperaturen auch bei Nacht geheizt werden muss bzw. bei entsprechend hohen Außentemperaturen klimatisiert werden soll.

Es ist daher die Aufgabe der vorliegenden Erfindung, einen Luftschalldämpfer für ein Fahrzeugtemperiergerät vorzusehen, mit welchem bei einfachem konstruktiven Aufbau in effizienter Art und Weise die Einleitung von Geräuschen in einen Innenraum des Fahrzeugs gemindert werden kann.

Erfindungsgemäß wird diese Aufgabe gelöst durch einen Luftschalldämpfer für ein Fahrzeugtemperiergerät, umfassend ein Schalldämpfergehäuse mit einem Befestigungsbereich zur Festlegung an einer Wandung des Fahrzeugs, wobei in dem Schalldämpfergehäuse ein in einem Anschlussbereich mit einem Temperiergerät in Verbindung zu bringender erster Strömungsraumbereich vorgesehen ist, der in einem ersten Umlenkungsbereich in einen zweiten Strömungsraumbereich übergeht, wobei im zweiten Strömungsraumbereich geführte Luft wenigstens bereichsweise eine Strömungsrichtung aufweist, welche eine einer Strömungsrichtung im ersten Strömungsraumbereich im Wesentlichen entgegengesetzt gerichtete Strömungsrichtungskomponente aufweist, und wobei der zweite Strömungsraumbereich in einem zweiten Umlenkungsbereich endet, in welchem das Schalldämpfergehäuse zu einem zu temperierenden Raum offen ist.

In dem erfindungsgemäßen Luftschalldämpfer wird vor allem durch die mehrfache Umlenkung der diesen durchströmenden Luft in den Umlenkungsbereichen eine Schallreflexion erzwungen, die einen erheblichen Beitrag zur Dämpfung liefert. Auch der Einsatz von Öffnungen, durch welche die zu fördernde Luft hindurchtritt, trägt zur Schalldämpfung bei, da auch in diesen Bereichen eine Schallreflexion auftritt und ggf. Interferenzen erzeugt werden.

Um bei dem erfindungsgemäßen Schalldämpfer eine weiter verbesserte Schalldämpfungscharakteristik erlangen zu können, wird vorgeschlagen, dass der erste Strömungsraumbereich oder/und der zweite Strömungsraumbereich wenigstens bereichsweise mit Schallabsorptionsmaterial ausgekleidet ist.

Das erfindungsgemäß vorzusehende Prinzip der mehrfachen Strömungsumlenkung kann in konstruktiver Hinsicht sehr einfach dadurch erlangt werden, dass das Schalldämpfergehäuse ein erstes rohrartiges Gehäuseteil aufweist, das in einem ersten Endbereich den Anschlussbereich aufweist und in einem zweiten Endbereich zur Bereitstellung des ersten Umlenkungsbereichs in Richtung seiner Längsachse abgeschlossen ist und eine erste Radialöffnungsanordnung aufweist, sowie ein zweites rohrartiges Gehäuseteil aufweist, welches das erste rohrartige Gehäuseteil umgibt und in einem dem zweiten Endbereich des ersten Gehäuseteils näher liegenden ersten Endbereich in Richtung der Längsachse abgeschlossen ist und in einem von dem zweiten Endbereich des ersten Gehäuseteils entfernter liegenden zweiten Endbereich eine zweite Radialöffnungsanordnung aufweist, wobei vorzugsweise weiter vorgesehen sein kann, dass das zweite Gehäuseteil in seinem ersten Endbereich mit einem Bodenbereich ausgebildet ist, der den zweiten Strömungsraumbereich am ersten Endbereich des zweiten Gehäuseteils und den ersten Strömungsraumbereich am zweiten Endbereich des ersten Gehäuseteils in Richtung der Längsachse abschließt. Der erfindungsgemäße Schalldämpfer bzw. das Schalldämpfergehäuse desselben kann in besonders einfacher Art und Weise hergestellt bzw. aufgebaut werden, wenn das erste Gehäuseteil und das zweite Gehäuseteil durch separate Bauteile bereitgestellt sind.

Gemäß einem weiteren vorteilhaften Aspekt des erfindungsgemäßen Schalldämpfers kann vorgesehen sein, dass der Befestigungsbereich am ersten Gehäuseteil vorgesehen ist und einen zur Anlage an oder/und Verbindung mit der Wandung ausgebildeten Verbindungsabschnitt aufweist, welcher in Richtung der Längsachse im Bereich des zweiten Endbereichs des zweiten Gehäuseteils liegt. Insbesondere wenn bei einer derartigen Anordnung weiter vorgesehen ist, dass der Verbindungsabschnitt das erste Gehäuseteil wenigstens bereichsweise umgibt und den zweiten Strömungsraumbereich am zweiten Endbereich des zweiten Gehäuseteils wenigstens teilweise in Richtung der Längsachse abschließt, kann durch den Befestigungsbereich eine in der Wandung vorgesehene Öffnung, durch welche beispielsweise das erste Gehäuseteil hindurchgeführt ist, abgeschlossen werden, so dass das Austreten von Luft durch diese Öffnung hindurch vermieden werden kann.

Ein weiter verbessertes Schalldämpfungsverhalten kann dadurch erlangt werden, dass im ersten Strömungsraumbereich ein von darin geführter Luft umströmbares Schallabsorptionselement vorgesehen ist. Dabei kann eine sehr stabile Anordnung vorgesehen werden, wenn das Schallabsorptionselement ein Trägerelement umfasst, an welchem an wenigstens einer Seite Schallabsorptionsmaterial getragen ist. Zur weiter verbesserten Schalldämpfung wird bei einer derartigen Anordnung vorgeschlagen, dass das Trägerelement mit Lochung versehen ist.

Das Schallabsorptionselement kann beispielsweise am Bodenbereich des zweiten Gehäuseteils getragen sein.

Die vorliegende Erfindung wird nachfolgend mit Bezug auf die beiliegenden Zeichnungen detailliert beschrieben. Es zeigt:
- Fig. 1: eine perspektivische, teilweise aufgeschnittene Ansicht eines erfindungsgemäßen Luftschalldämpfers;
- Fig. 2: den Luftschalldämpfer der Fig. 1 im Längsschnitt.

In den Figuren ist ein erfindungsgemäßer Luftschalldämpfer allgemein mit 10 bezeichnet. Dieser Luftschalldämpfer 10 umfasst im Wesentlichen zwei Gehäuseteile 12, 14. Der Luftschalldämpfer 10 ist zur Anbringung an einer Wandung 16 vorgesehen, welche beispielsweise eine Außenwand eines Wohnmobils oder Wohnwagens oder sonstigen Fahrzeugs sein kann, beispielsweise aber auch eine Wand eines in einem Innenraum des Fahrzeugs vorgesehenen Behältnisses, beispielsweise eines für den Einbau eines Heizgeräts oder eines Klimatisierungsgeräts vorgesehenen Schranks oder Kastens. Diese Wandung 16 weist an dem Bereich, wo der Luftschalldämpfer vorzusehen ist, eine Öffnung 18 auf, die bei beispielsweise im Wesentlichen kreisrunder Ausgestaltung des Gehäuseteils 12 ebenfalls eine kreisrunde Kontur haben kann und einen geringfügig größeren Durchmesser aufweisen kann.

Das Gehäuseteil 12 weist zur Anbindung an ein Temperiergerät, also beispielsweise ein Heizgerät, einen Anschlussbereich 20 auf, der zur wahlweisen Verbindung mit Schlauchleitungen verschiedenen Durchmessers entsprechend gestuft ist, wobei bei Einsatz einer Stufe größeren Durchmessers zum Vermeiden von Drosseleffekten die Stufenbereiche kleineren Durchmessers entfernt, beispielsweise abgeschnitten werden können. Zur Verbindung mit der Wandung 16 weist weiterhin das Gehäuseteil 12 einen dieses vorzugsweise in Umfangsrichtung um eine Längsachse L desselben durchlaufend ausgebildeten Verbindungsflanschbereich 22 auf. Dieser kann ggf. auch unter Zwischenlagerung von Dichtungsorganen an der Wandung 16 anliegen und damit durch Verschraubung, Verklebung oder in sonstiger Art und Weise fest verbunden werden.

Das erste Gehäuseteil 12 weist in seinem zweiten Endbereich 24, also demjenigen Endbereich, der von dem den Verbindungsbereich bildenden ersten Endbereich 26 in Abstand liegt, eine Mehrzahl von um die Längsachse L herum vorgesehenen Durchtrittsöffnungen 28 auf.

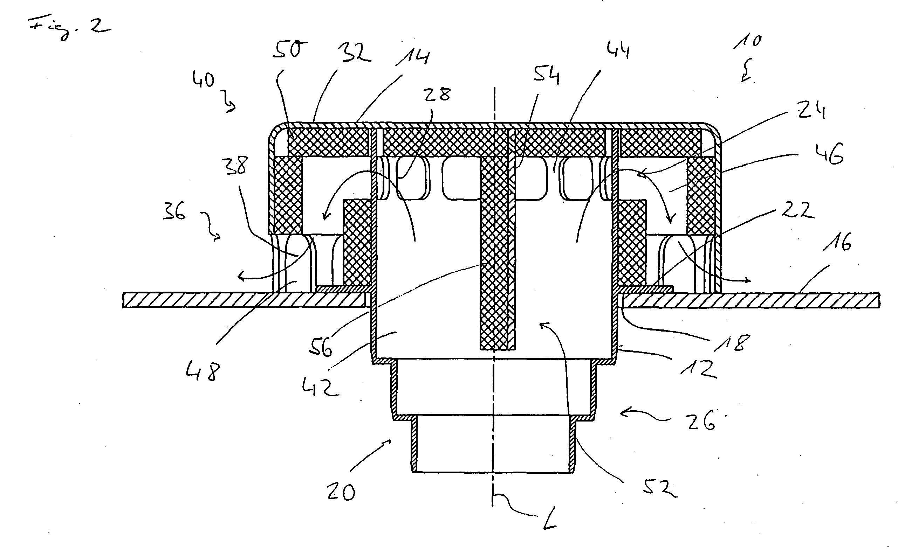

Das zweite Gehäuseteil 14 ist im Wesentlichen topfartig ausgebildet und weist einen das erste Gehäuseteil 12 in einem Bereich seiner Längserstreckung umgebenden, im Wesentlichen zylindrischen Gehäuseabschnitt 30 sowie einen Bodenbereich 32 auf. Das erste Gehäuseteil 12 ist mit dem zweiten Gehäuseteil 14 im Bereich seines zweiten Endbereichs 24 durch Verklebung, Verrastung oder ggf. auch durch integrale Herstellung dieser beiden Gehäuseteile 12, 14 fest verbunden. Ein erster Endbereich 34 - wiederum bezogen auf die Längsachse L - des zweiten Gehäuseteils 14 bzw. des zylindrischen Abschnitts 30 desselben liegt in Richtung der Längsachse L näherungsweise im Bereich des zweiten Endbereichs 24 des ersten Gehäuseteils 12. In seinem zweiten axialen Endbereich 36 weist das zweite Gehäuseteil 14 bzw. der zylindrische Gehäuseabschnitt 30 desselben eine Mehrzahl von Durchtrittsöffnungen 38 auf, die wiederum um die Längsachse L aufeinander folgend angeordnet sind und die im dargestellten Beispiel in der radialen Richtung offen sind. Die Positionierung des Verbindungsabschnitts 22 am ersten Gehäuseteil 12 ist derart gewählt, dass bei Anbringung des im Wesentlichen die beiden Gehäuseteile 12, 14 umfassenden Schalldämpfergehäuses 40 an der Wandung 16 das zweite Gehäuseteil 14 in seinem zweiten Endbereich 36 sehr nahe an der Wandung 16 liegt bzw. an dieser Wandung 16 ansteht, wie in der Fig. 2 erkennbar.

Bei Durchströmung des Schalldämpfergehäuses 40 in dem Falle, in welchem der Schalldämpfer 10 als Ausströmschalldämpfer genutzt wird, also über diesen Schalldämpfer 10 temperierte Luft in das Fahrzeug eingeleitet werden soll, tritt die thermisch behandelte Luft durch den Verbindungsbereich 20, d.h. den ersten Endbereich 26 des Gehäuseteils 12, in einen in diesem Gehäuseteil 12 gebildeten ersten Strömungsraumbereich 42 ein. Die Luft strömt entlang dieses ersten Strömungsraumbereichs 42 im Wesentlichen in der Richtung der Längsachse L in Richtung zum zweiten Endbereich 24, wo jedoch das Gehäuseteil 12 durch den Bodenbereich 32 abgeschlossen ist. Es ist in diesem Bereich also ein allgemein mit 44 bezeichneter erster Umlenkbereich gebildet, in welchem die den ersten Strömungsbereich 42 durchströmende Luft nach radial außen - bezogen auf die Längsachse L - umgelenkt wird, so dass sie durch die Öffnungen 28 hindurch in einen zweiten Strömungsraumbereich 46 eintritt. Dieser zweite Strömungsraumbereich 46 ist im Wesentlichen zwischen dem ersten Gehäuseteil 12 und dem zylindrischen Gehäuseabschnitt 30 des zweiten Gehäuseteils 14 gebildet. Auch der zweite Strömungsraumbereich 46 ist im Bereich des ersten Endbereichs 34 des zweiten Gehäuseteils 14 bzw. des zylindrischen Gehäuseabschnitts 30 desselben durch den Bodenbereich 32 abgeschlossen. Es findet somit zwangsweise eine Umlenkung der Luftströmung um näherungsweise 180° statt. Die Luft srömt dann im Wesentlichen in einer Strömungsrichtung, welche der Strömungsrichtung im ersten Strömungsraumbereich 42 entgegengesetzt ist, in Richtung zum zweiten Endbereich 36 des Gehäuseteils 14, wo ein weiterer allgemein mit 48 bezeichneter Umlenkbereich gebildet ist. In diesem Umlenkbereich wird durch das Abschließen des zweiten Strömungsraumbereichs 46 in axialer Richtung durch den flanschartigen Verbindungsabschnitt 22 und die Wandung 16 die Luft zwangsweise nach radial außen gelenkt, so dass sie durch die Öffnungen 38 hindurch aus dem Schalldämpfergehäuse 40 austritt und in den zu temperierenden Raum eintritt.

Man erkennt in den Figuren weiter, dass der erste Strömungsraumbereich 42 und der zweite Strömungsraumbereich 46 zumindest teilweise mit schraffiert dargestelltem Schallabsorptionsmaterial 50 ausgekleidet sind. Zusätzlich zu dem durch Strömungsrichtungsumlenkung vorgesehenen Reflexionsaspekt der Schalldämpfung tritt hier also ein Absorptionseffekt auf. Hier ist vorzugsweise die Positionierung des Schallabsorptionsmaterials 50 derart, dass, wie im Falle des zweiten Strömungsraumbereichs 46 deutlich erkennbar, nahezu der gesamte umströmte Oberflächenbereich damit bedeckt ist. Dies könnte selbstverständlich auch im ersten Strömungsraumbereich 42 so sein.

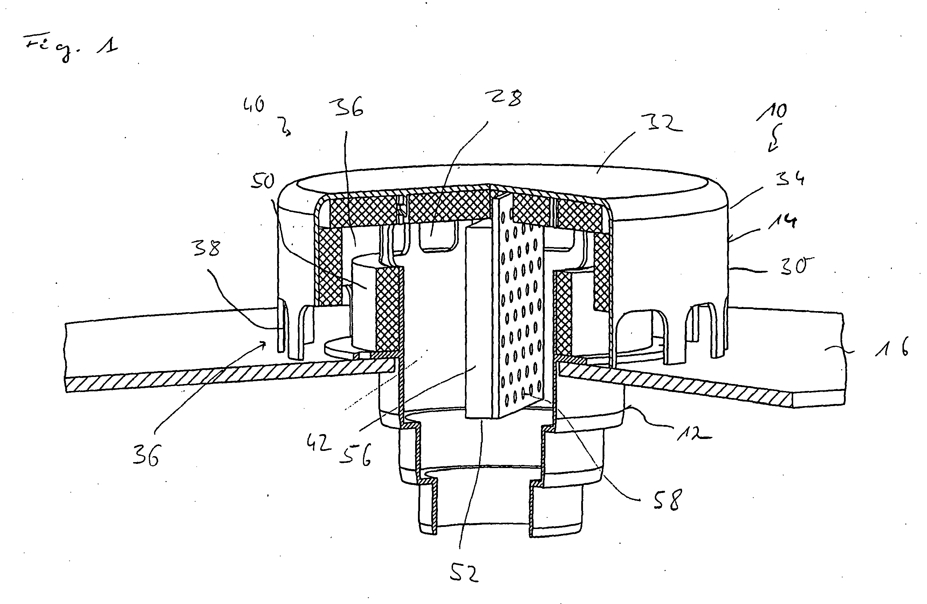

Man erkennt weiter, dass im ersten Strömungsraumbereich 42 ein Schallabsorptionselement 52 vorgesehen ist. Dieses umfasst ein plattenartiges Trägerelement 54, das an zumindest einer Seite Schallabsorptionsmaterial 56 trägt. Der Darstellung der Fig. 1 kann entnommen werden, dass dieses Schallabsorptionselement 52 eine Abmessung quer zur Längsrichtung L aufweist, die geringer ist, als der lnnendurchmesser des ersten Gehäuseteils 12, so dass über den gesamten Umfangsberfeich dieses Schallabsoprtionselement 52 von Luft umströmt werden kann. Selbstverständlich wäre es auch denkbar, in der Richtung quer zur Längsachse das Schallabsorptionselement 52 mit einer derartigen Erstreckungsabmessung auszugestalten, dass der erste Strömungsraumbereich 42 in zwei zumindest nahe dem zweiten Endbereich 24 des Gehäuseteils 12 nicht mehr in Verbindung stehende Bereiche unterteilt ist. Das Schallabsorptionselement 52 ist am Bodenbereich 32 getragen. Um die Absorptionswirkung desselben weiter verbessern zu können, kann dann, wenn nur an einer Seite des Trägerelements 54 Schallabsorptionsmaterial 56 vorgesehen ist, das Trägerelement 54 mit einer Vielzahl von Löchern oder Öffnungen 58 versehen sein.

Bei dem erfindungsgemäßen Luftschalldämpfer 10 werden in sehr vorteilhafter Weise bei sehr kompakter Bauart verschiedene Schalldämpfungsmechanismen kombiniert. Es tritt sowohl Schallreflexion als auch Schallabsorption auf; bei entsprechender Ausgestaltung von Öffnungen kann auch der Effekt der Interferenz zur Schalldämpfung genutzt werden. Durch das Vorsehen des flanschartigen Verbindungsabschnitts 22 in demjenigen axialen Bereich, in welchem auch der zweite Endbereich 36 des zweiten Gehäuseteils 14 liegt, wird dafür gesorgt, dass die Wandung 16, welche das Schalldämpfergehäuse 40 trägt, gleichzeitig auch zum Abschließen des zweiten Strömungsraumbereichs 46 in axialer Richtung dient, so dass letztendlich die Wandung 16 einen Teilaspekt des zweiten Umlenkungsbereichs 48 bilden kann. Weiterhin ist durch den vorzugsweise vollständig ringartig umlaufenden Flanschabschnitt 22 dafür gesorgt, dass die Öffnung 18 in der Wandung 16 dicht abgeschlossen werden kann und in diesem Bereich keine Luft aus dem zweiten Strömungsraumbereich 46 austreten kann. Hier wäre es grundsätzlich auch denkbar, den flanschartigen Verbindungsabschnitt 22 nach radial außen zu verlängern, so dass dieser vollständig den axialen Abschluss des zweiten Strömungsraumbereichs 46 liefern kann.

Es ist selbstverständlich, dass der in den Figuren dargestellte Schalldämpfer auch bei Durchströmung in entgegengesetzter Richtung genutzt werden kann, also dann, wenn über einen derartigen Schalldämpfer 10 Luft aus einem Innenraum eines Fahrzeugs abgezogen werden kann, um im Umluftbetrieb diese thermisch zu behandeln und dann wieder beispielsweise über einen weiteren Schalldämpfer 10 in diesen Inneraum einzuleiten. Selbstverständlich ist es weiterhin möglich, im ersten Gehäuseteil 12 beispielsweise in dem außerhalb des Innenraums eines Fahrzeugs liegenden Abschnitt, also in der Darstellung der Fig. 2 dem unter der Wandung 16 liegenden Abschnitt, eine vorzugsweise verschließbare Nebenlufteintrittsöffnung vorzusehen, um Frischluft beizumischen.

Die Gehäuseteile und selbstverständlich auch das Trägerelement 54 können aus Kunststoff oder Metall gefertigt werden.

## Patentansprüche

1. Luftschalldämpfer für ein Fahrzeugtemperiergerät, umfassend ein Schalldämpfergehäuse (40) mit einem Befestigungsbereich (22) zur Festlegung an einer Wandung (16) des Fahrzeugs, wobei in dem Schalldämpfergehäuse (40) ein in einem Anschlussbereich (20) mit einem Temperiergerät in Verbindung zu bringender erster Strömungsraumbereich (42) vorgesehen ist, der in einem ersten Umlenkungsbereich (44) in einen zweiten Strömungsraumbereich (46) übergeht,
**dadurch gekennzeichnet, dass** die im zweiten Strömungsraumbereich (46) geführte Luft wenigstens bereichsweise eine Strömungsrichtung aufweist, welche eine einer Strömungsrichtung im ersten Strömungsraumbereich im Wesentlichen entgegengesetzt gerichtete Strömungsrichtungskomponente aufweist, und der zweite Strömungsraumbereich (46) in einem zweiten Umlenkungsbereich (48) endet, in welchem das Schalldämpfergehäuse (40) zu einem zu temperierenden Raum offen ist.

2. Luftschalldämpfer nach Anspruch 1,
**dadurch gekennzeichnet, dass** der erste Strömungsraumbereich (42) oder/und der zweite Strömungsraumbereich (46) wenigstens bereichsweise mit Schallabsorptionsmaterial (50) ausgekleidet ist.

3. Luftschalldämpfer nach Anspruch 1 oder 2,
**dadurch gekennzeichnet, dass** das Schalldämpfergehäuse (40) ein erstes rohrartiges Gehäuseteil (12) aufweist, das in einem ersten Endbereich (26) den Anschlussbereich (20) aufweist und in einem zweiten Endbereich (24) zur Bereitstellung des ersten Umlenkungsbereichs in Richtung seiner Längsachse abgeschlossen ist und eine erste Radialöffnungsanordnung (28) aufweist, sowie ein zweites rohrartiges Gehäuseteil (14) aufweist, welches das erste rohrartige Gehäuseteil (12) umgibt und in einem dem zweiten Endbereich (24) des ersten Gehäuseteils (12) näher liegenden ersten Endbereich (34) in Richtung der Längsachse (L) abgeschlossen ist und in einem von dem zweiten Endbereich (24) des ersten Gehäuseteils (12) entfernter liegenden zweiten Endbereich (36) eine zweite Radialöffnungsanordnung (38) aufweist.

4. Luftschalldämpfer nach Anspruch 3,
**dadurch gekennzeichnet, dass** das zweite Gehäuseteil (14) in seinem ersten Endbereich (34) mit einem Bodenbereich (32) ausgebildet ist, der den zweiten Strömungsraumbereich (46) am ersten Endbereich (34) des zweiten Gehäuseteils (14) und den ersten Strömungsraumbereich (42) am zweiten Endbereich (24) des ersten Gehäuseteils in Richtung der Längsachse (L) abschließt.

5. Luftschalldämpfer nach Anspruch 3 oder 4,
**dadurch gekennzeichnet, dass** das erste Gehäuseteil (12) und das zweite Gehäuseteil (14) durch separate Bauteile bereitgestellt sind.

6. Luftschalldämpfer nach einem der Ansprüche 3 bis 5,
**dadurch gekennzeichnet, dass** der Befestigungsbereich (22) am ersten Gehäuseteil (12) vorgesehen ist und einen zur Anlage an oder/und Verbindung mit der Wandung (16) ausgebildeten Verbindungsabschnitt (22) aufweist, welcher in Richtung der Längsachse (L) im Bereich des zweiten Endbereichs (36) des zweiten Gehäuseteils (14) liegt.

7. Luftschalldämpfer nach Anspruch 6,
**dadurch gekennzeichnet, dass** der Verbindungsabschnitt (22) das erste Gehäuseteil (12) wenigstens bereichsweise umgibt und den zweiten Strömungraumbereich (46) am zweiten Endbereich (36) des zweiten Gehäuseteils (14) wenigstens teilweise in Richtung der Längsachse (L) abschließt.

8. Luftschalldämpfer nach einem der Ansprüche 1 bis 7,
**dadurch gekennzeichnet, dass** im ersten Strömungsraumbereich (42) ein von darin geführter Luft umströmbares Schallabsorptionselement (52) vorgesehen ist.

9. Luftschalldämpfer nach Anspruch 8,
**dadurch gekennzeichnet, dass** das Schallabsorptionselement (52) ein Trägerelement (54) umfasst, an welchem an wenigstens einer Seite Schallabsorptionsmaterial (56) getragen ist.

10. Luftschalldämpfer nach Anspruch 9,
**dadurch gekennzeichnet, dass** das Trägerelement (54) mit Lochung (58) versehen ist.

11. Luftschalldämpfer nach Anspruch 4 und einem der Ansprüche 8 bis 10,
**dadurch gekennzeichnet, dass** das Schallabsorptionselement (52) an dem Bodenbereich (32) des zweiten Gehäuseteils (14) getragen ist.

## Claims

1. Air exhaust silencer for a vehicle tempering device, comprising a silencer housing (40) with a fixing section (22) for fixing at a wall (16) of the vehicle, a first flow space section (42) for connection with a tempering device in a connecting area (20) being provided in the exhaust silencer housing (40), the first flow section passing into a second flow space section (46) in a first redirecting section (44),
**characterized in** the air being carried in the second flow space section (46) having at least partially a flow direction comprising a flow direction component which is substantially in opposite direction to a flow direction in the first flow space section, and **in that** the second flow space section (46) ends in a second redirecting section (48), in which the silencer housing (40) is open towards a space to be tempered.

2. Air exhaust silencer according to claim 1,
**characterized in that** the first flow space section (42) or/and the second flow space section (46) are at least partially lined with sound absorption material (50).

3. Air exhaust silencer according to claim 1 or 2,
**characterized in that** the silencer housing (40) comprises a first tube-like housing part (12), comprising the connecting section (20) in a first end section (26) and being closed off in the direction of its longitudinal axis in a second end section (24) for providing the first redirecting section and comprising a first radial opening arrangement (28) as well as a second tube-like housing part (14), surrounding the first tube-like housing part (12) and being closed off in the direction of the longitudinal axis (L) in a first end section (34) being closer to the second end section (24) of the first housing part (12), and comprising a second radial opening arrangement (38) in a second end section (36) being more remote to the second end section (24) of the first housing part (12).

4. Air exhaust silencer according to claim 3,
**characterized in that** the second housing part (14) in its first end section (34) is provided with a bottom section (32) closing off the second flow space section (46) at the first end section (34) of the second housing part (14) and the first flow space section (42) at the second end section (24) of the first housing part in the direction of the longitudinal axis (L).

5. Air exhaust silencer according to claim 3 or 4,
**characterized in that** the first housing part (12) and the second housing part (14) are provided by separate components.

6. Air exhaust silencer according to one of the claims 3 to 5,
**characterized in that** the fixing section (22) is provided at the first housing part (12) and comprises a connecting section (22) formed for an abutment at or/and a connection with the wall (16) and which is situated in the direction of the longitudinal axis (L) in the area of the second end section (36) of the second housing part (14).

7. Air exhaust silencer according to claim 6,
**characterized in that** the connecting section (22) surrounds the first housing part (12) at least partially and closes off the second flow space section (46) at the second end section (36) of the second housing part (14) at least partially in the direction of the longitudinal axis (L).

8. Air exhaust silencer according to one of the claims 1 to 7,
**characterized in that** a sound absorption element (52) which may be surrounded by air carried therein is provided in the first flow space section (42).

9. Air exhaust silencer according to claim 8,
**characterized in that** the sound absorption element (52) comprises a carrier element (54) at which sound absorption material (56) is carried at least on one side.

10. Air exhaust silencer according to claim 9,
**characterized in that** the carrier element (54) is provided with an opening arrangement (58).

11. Air exhaust silencer according to claim 4 and one of claims 8 to 10,
**characterized in that** the sound absorption element (52) is carried at the bottom section (32) of the second housing part (14).

## Revendications

1. Silencieux d'air d'échappement pour un dispositif de climatisation de véhicule, comprenant un boîtier de silencieux (40) avec une zone de fixation (22) pour la fixation à un paroi (16) du véhicule, une première zone d'espace de courant (42) à être connectée à un dispositif de climatisation dans une zone de raccord (20) étant prévue dans le boîtier de silencieux (40), la première zone d'espace de courant passant à une deuxième zone d'espace de courant (46) dans une première zone de déviation (44),
**caractérisé en** l'air guidé dans la deuxième zone d'espace de courant (46) présentant au moins partiellement un sens de courant comprenant un composant de sens de courant qui est substantiellement opposé au sens de courant dans la première zone d'espace de courant, et en ce que la deuxième zone d'espace de courant (46) se termine dans une deuxième zone de déviation (48) dans laquelle le boîtier de silencieux (40) est ouvert vers un espace à climatiser.

2. Silencieux d'air d'échappement selon la revendication 1
**caractérisé en ce que** la première zone d'espace de courant (42) ou/et la deuxième zone d'espace de courant (46) sont au moins partiellement recouvertes de matériel d'absorption de son (50).

3. Silencieux d'air d'échappement selon la revendication 1 ou 2,
**caractérisé en ce que** le boîtier de silencieux (40) prévoit une première part de boîtier en forme de tube (12) qui comprend la zone de raccord (20) dans une première zone terminale (26) et qui est clôturée dans le sens de son axe longitudinale dans une deuxième zone terminale (24) pour prévoir la première zone de déviation, et qui comprend un premier agencement d'orifice radial (28) et une deuxième part de boîtier en forme de tube (14) qui entoure la première part de boîtier en forme de tube et qui est clôturée dans le sens de son axe longitudinale (L) dans une première zone terminale (34) plus proche de la deuxième zone terminale (24) de la première part de boîtier (12) et qui comprend un deuxième agencement d'orifice radial (38) dans une deuxième zone terminale (36) plus éloignée de la première part de boîtier (12).

4. Silencieux d'air d'échappement selon la revendication 3,
**caractérisé en ce que** la deuxième part de boîtier (14) dans sa première zone terminale (34) est pourvue d'une zone de fond (32) qui clôture la deuxième zone d'espace de courant (46) au niveau de la première zone terminale (34) de la deuxième part (14) et qui clôture la première zone d'espace de courant (42) au niveau de la deuxième zone terminale (24) de la première part de boîtier dans le sens de son axe longitudinale (L).

5. Silencieux d'air d'échappement selon la revendication 3 ou 4,
**caractérisé en ce que** la première part de boîtier (12) et la deuxième part de boîtier (14) sont prévues par des composants séparés.

6. Silencieux d'air d'échappement selon une des revendications 3 à 5,
**caractérisé en ce que** la zone de fixation (22) est prévue au niveau de la première part de boîtier (12) et comprend une zone de raccord (22) pour un placement contre ou/et un raccord avec le paroi (16), qui dans le sens de son axe longitudinale (L) se trouve dans la région de la deuxième zone terminale (36) de la deuxième part de boîtier (14).

7. Silencieux d'air d'échappement selon la revendication 6,
**caractérisé en ce que** la zone de raccord (22) entoure au moins partiellement la première part de boîtier (12) et clôture au moins partiellement dans le sens de l'axe longitudinale (L) la deuxième zone d'espace de courant (46) au niveau de la deuxième zone terminale (36) de la deuxième part de boîtier (14).

8. Silencieux d'air d'échappement selon une des revendications 1 à 7,
**caractérisé en ce qu'**une première zone d'espace de courant (42) comprend un élément d'absorption de son (52) entourable par l'air guidé là dedans.

9. Silencieux d'air d'échappement selon la revendication 8,
**caractérisé en ce que** l'élément d'absorption de son (52) comprend un élément de support (54) supportant au moins à un côté du matériel d'absorption de son (56).

10. Silencieux d'air d'échappement selon la revendication 9,
**caractérisé en ce que** I élément de support (54) est pourvu d'un arrangement d'orifice (58):

11. Silencieux d'air d'échappement selon la revendication 4 et une des revendications 8 à 10,
**caractérisé en ce que** l'élément d'absorption de son (52) est supporté au niveau de la zone de fond (32) de la deuxième part de boîtier (14).
